# EUROPÄISCHE PATENTSCHRIFT

(11) **EP 1 055 456 B1**
(45) Veröffentlichungstag und Bekanntmachung des Hinweises auf die Patenterteilung: **16.11.2005**
(21) Anmeldenummer: 00107516.7
(22) Anmeldetag: 07.04.2000
(51) Int. Cl.: B01J 31/12, C08G 18/24, C08G 63/85, C08G 71/00, C08G 77/08

(54) **Verfahren zur Herstellung wasserlöslicher Katalysatoren**
Process for preparing water-soluble catalysts
Procédé de préparation des catalyseurs solubles dans l'eau

(30) Priorität: 26.05.1999 DE 19924101
(43) Veröffentlichungstag der Anmeldung: 29.11.2000
(73) Patentinhaber: Crompton GmbH, 59192 Bergkamen (DE)
(72) Erfinder: Gerigk, Ursula, Dr., 45731 Waltrop (DE); Schumacher, Oliver, Dr., 59368 Werne (DE)

(56) Entgegenhaltungen:
- EP-A- 0 321 165
- EP-A- 0 358 282
- WO-A-92/17518
- US-A- 4 719 194
- US-A- 5 089 645
- US-A- 5 436 357

## Beschreibung

Die Verwendung von Organozinnverbindungen als Katalysatoren für Ver- und Umesterungsreaktionen sowie zur Herstellung oder Härtung von Polymeren, insbesondere Polyurethanen, Polysiloxanen und Polyestern ist bekannt.

Marktübliche Organozinnkatalysatoren sind beispielsweise Mono- und Dialkylzinnverbindungen des vierwertigen Zinns der Formeln:

R^{a}SnX^{a} ₃, R^{a} ₂SnX^{a} ₂, [R^{a} ₂SnO]ₓ, R^{a}SnOOH

oder 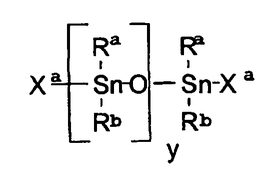 mit
- R^{a} =: Alkylgruppe mit 1 bis 8 C-Atomen,
- R^{b} =: R^{a} oder X^{a}
- X^{a} =: -O-, -OH, -S-, Halogenid, -OR^{d}, -OOCR^{d}, -SR^{d}, wobei R^{d} eine gegebenenfalls verzweigte, gegebenenfalls ungesättigte, gegebenenfalls substituierte Alkylgruppe,
- x: ein Wert ≥ 2, y ein Wert ≥ 1.

Die genaue Struktur der Organozinnoxide ist nicht bekannt, wobei man aber im allgemeinen davon ausgeht, dass sie mindestens als Dimere vorliegen. Ihr Einsatz zur Durchführung der Polymerisation, Polyaddition, Polykondensation oder Härtung erfolgt häufig in wässrigen oder wasserhaltigen Systemen, z.B. bei der Herstellung von Beschichtungen, wassergetriebenen Polymerschäumen etc.

Bei der Verwendung in wässrigen oder wasserhaltigen Systemen haben Organozinnkatalysatoren nach dem Stand der Technik die Nachteile mangelnder Wasserlöslichkeit und/oder mangelnder Hydrolysestabilität und/oder mangelnder katalytischer Aktivität.

Die überwiegende Anzahl der bekannten Organozinnverbindungen ist in Wasser nicht oder nur in geringem Masse löslich. Für den Einsatz als Katalysatoren in wässrigen Systemen können sie deshalb nicht homogen in Wasser gelöst eingesetzt werden, sondern müssen heterogen als Mischungen, Emulsionen oder Suspensionen, teilweise unter Zuhilfenahme von Lösemitteln, Detergenzien oder weiteren Hilfsstoffen eingearbeitet werden.

Es sind nur wenige Organozinnverbindungen mit guter Wasserlöslichkeit bekannt. Dabei handelt es sich vorwiegend um stark saure Mono- und Dialkylzinnverbindungen mit kurzkettigen Alkylgruppen, z.B. (C₄H₉)SnCl₃, (CH₃)₂SnCl₂, (CH₃)₂Sn(O₃SCH₃)₂, (C₄H₉)₂Sn(O₃SCH₃)₂.

Bei Auflösen solcher Organozinnverbindungen in Wasser erfolgt sofort eine zumindest partielle Hydrolyse; es bilden sich - im Sauren zunächst lösliche - Stannoxane und die entsprechenden Säuren (z.B. HCl, HO₃SCH₃). Die entstehenden sauren Lösungen sind stark korrosiv, was für die meisten Anwendungen von Nachteil ist. Ausserdem reduzieren die freigesetzten Säuren die katalytische Aktivität der Organozinnverbindungen, was solche Lösungen für viele Katalyse-Anwendungen (z.B. die Kondensation von Silikonen) ungeeignet macht.

Versucht man, solche sauren Lösungen zu neutralisieren, fallen die Organozinnverbindungen als Stannoxane, Polystannoxane oder Organozinnoxide aus.

Organozinn-Carboxylate und Organozinn-Alkoholate sind im allgemeinen weder wasserlöslich noch hydrolysestabil. Bei Kontakt mit Wasser zersetzen sie sich unter Bildung und Ausfällung von Stannoxanen, Polystannoxanen oder Organozinnoxiden.

Organozinn-Merkaptide sind im allgemeinen ebenfalls nicht wasserlöslich. Sie zeichnen sich aber gegenüber anderen Organozinnverbindungen durch ihre erhöhte Hydrolysestabilität aus. Diese Stabilität geht aber mit einer deutlich reduzierten Reaktivität als Katalysator einher.

Während in gewissen Systemen (z. B. in Mischung mit Isocyanaten) eine nachträgliche chemische oder thermische Aktivierung von Organozinn-Merkaptiden unter Bildung aktiverer Katalysatoren erfolgen kann, zeigen sie in weniger reaktiven Systemen, z.B. Siliconen, keine oder keine ausreichende katalytische Wirkung mehr.

Aufgabe dieser Erfindung war es, Organozinn-Katalysatoren zur Verwendung in wässrigen oder wasserhaltigen Systemen zu finden, welche in Wasser löslich und lagerstabil sind, keine freien starken Säuren enthalten, katalytische Aktivität besitzen und diese Aktivität auch bei längerer Lagerung in oder in längerem Kontakt mit Wasser nicht verlieren.

Überraschenderweise wurde gefunden, dass diese Aufgabe gelöst wird durch Inkontaktbringen von wässrigen Lösungen von Organozinnverbindungen der allgemeinen Formel (I) mit wässrigen Lösungen von Polyelektrolyten der allgemeinen Formeln II und/oder III

RₙSnX₄₋ₙ (I)

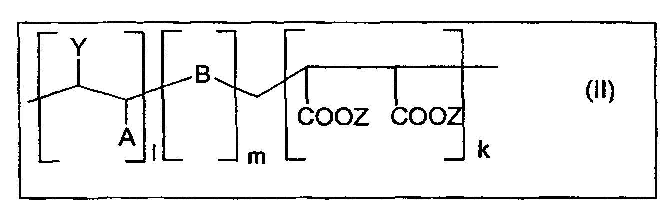

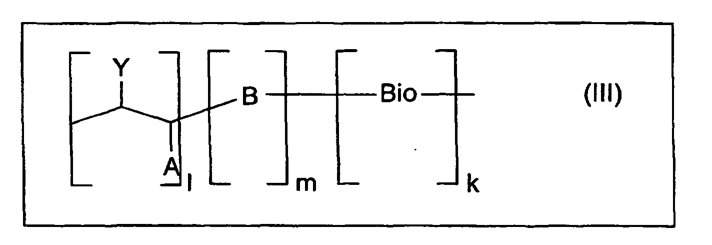

worin
- R =: C₁-C₄-Alkyl, vorzugsweise CH₃ oder C₄H₉
- n =: 1 oder 2
- X =: anionischer Rest -O-, -OH, F, Cl, Br, J, insbesondere Cl, -OR¹, -SR¹, -OOCR¹, -SO₃R¹, vorzugsweise ein Anion einer starken Säure, besonders bevorzugt Cl oder SO₃R¹ mit
- R¹ =: gegebenenfalls substituiertes Alkyl, Aryl oder Aralkyl bedeuten und R, X und R¹ jeweils gleich oder verschieden sein können,
mit Polyelektrolyten, insbesondere Polymeren oder Copolymeren der allgemeinen Formel (II) und/oder III
- Y =: H oder CH₃,
- A =: -COOZ, -SO₃Z, -OSO₃Z oder -PO₃Z₂
- Bio =: der Rest eines Biopolymeren
- Z =: H, eine gegebenenfalls substituierte Alkylgruppe oder ein kationischer Rest aus der Gruppe der Alkali-Erdalkali- oder Amoniumsalze, vorzugsweise H, CH₃, Na, K, Ca oder NR²R³R⁴R⁵ mit R², R³, R⁴ und R² bis R⁵ = H oder gegebenenfalls eine substituierte Alkylgruppe mit 1-10 C-Atomen, vorzugsweise CH₃, Hydroxyethyl, Hydroxyisopropyl,
- B =: Rest eines ethylenisch ungesättigten Monomers wie z.B. Ethylen, Propylen, Butadien, Isopren, Vinylchlorid, Vinylidenchlorid oder - fluorid, Styrol, Inden, Vinylacetat, Vinylalkohol, Vinylformal, Acrolein, Methylvinylketon, Vinylpyrrolidon, Maleinsäureanhydrid, Acrylnitril, Vinylether, (Meth)Acrylsäure, (Meth)Acrylamid, (Meth)Acrylsäureester, Cyanacrylsäureester u.a., und Y, A, Z, B innerhalb k, l, m jeweils gleich oder verschieden sein können, mit m ≥ 0,
- l, k =: 0 - 200, insbesondere 50 - 150, vorzugsweise 60 - 100 mit l + k ≥ 20, wobei das Verhältnis von (l+k) / m so gewählt wird, dass die Polymeren in der dissoziierten Form wasserlöslich sind.

Die erfindungsgemäss mitverwendeten Polyelektrolyte können sowohl Biopolymere wie Alginsäure, Gummi Arabicum, Nucleinsäuren, Pektine, Proteine und andere als auch chemisch modifizierte Biopolymere wie Carboxymethylcellulose, Ligninsulfonate und insbesondere synthetische Polymere wie z.B. Poly(meth)acrylsäure, Polyvinylsulfonsäure, Polyvinylphosphonsäure (Vinylphosphonsäure-Polymere), Polymaleinsäure sowie deren Copolymerisate miteinander und mit ungesättigten Olefinen wie beispielsweise Ethylen, Propylen, Butadien, Isopren, Vinylchlorid, Vinylidenchlorid oder -fluorid, Styrol, Inden, Vinylacetat, Vinylalkohol, Vinylformal, Acrolein, Methylvinylketon, Vinylpyrrolidon, Maleinsäureanhydrid, Acrylnitril, Vinylether, (Meth)Acrylamid, Cyanacrylsäureester sein.

Erfindungsgemäss können alle Polyelektrolyte mitverwendet werden, deren Anteil an dissoziierbaren Gruppen - die Bestandteil oder Substituent der Polymerekette sein können - so gross ist, dass die Polymeren in der dissoziierten Form wasserlöslich sind.

Erfindungsgemäss bevorzugt werden als Polyelektrolyte die sogenannten Polysäuren mitverwendet. Aus ihnen entstehen bei der Dissoziation unter Abspaltung von Protonen Polyanionen, die sowohl anorganische als auch organische Polymere sein können. Beispiele für Polysäuren, deren Salze als Polysalze bezeichnet werden, mit den Gruppierungen I-V als charakteristische Grundeinheiten sind: Poly (Meth)acrylsäure (I) Polyvinylschwefelsäure (II), Polyvinylsulfonsäure (III), Polyvinylphosphonsäure (IV), Polymaleinsäure (V):

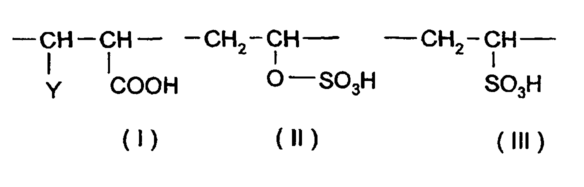

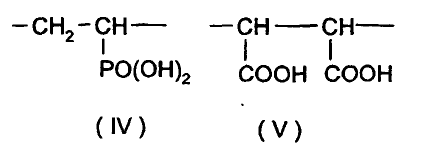

Neben den Grundeinheiten mit dissoziierbaren Gruppen können auch ethylenisch ungesättigte Monomere wie z.B. Ethylen, Propylen, Butadien, Isopren, Vinylchlorid, Vinylidenchlorid oder -fluorid, Styrol, Inden, Vinylacetat, Vinylalkohol, Vinylformal, Acrolein, Methylvinylketon, Vinylpyrrolidon, Maleinsäureanhydrid, Acrylnitril, Vinylether, (Meth)Acrylsäure, (Meth)Acrylamid, (Meth)Acryl-säureester, Cyanacrylsäureester und andere mitverwendet werden.

Der Anteil an diesen auch ethylenisch ungesättigten Monomeren im Polymeren kann entsprechend den jeweils gewünschten Endeigenschaften des Katalysators, auch in Bezug auf die Anwendungsgebiete, eingestellt werden. Die Verteilung der einzelnen Monomeren im Polymermolekül kann statistisch sein oder es können Blöcke einzelner Monomerer - miteinander oder untereinander - polymerisiert werden.

Einzige Bedingung ist, dass der Anteil an dissozüerbaren Gruppen im Polymeren gross genug ist, um sowohl das Polymere selbst als auch die Mischung bzw. das Reaktionsprodukt aus Verbindungen der allgemeinen Formel (I) mit den Polyelektrolyten der allgemeinen Formel (II) wasserlöslich zu halten.

Die Grundeinheiten als auch die Verfahren zur Herstellung der entsprechenden Homo- und Co-Polymerisate gehören zum bekannten Stand der Technik (vergleiche CD Römpp, Chemie Lexikon - Version 1.0, Stuttgart/New York). Erfindungsgemäss mitverwendbare Organozinnverbindungen der allgemeinen Formel (I) sind Monomethylzinn-, Monobutylzinn-, Dimethylzinn- und Dibutylzinn-Oxide, -Hydroxide, -Alkoholate, -Halogenide, -Merkaptide, -Carboxylate und -Sulfonate, vorzugsweise MeSnCl₃, Me₂SnCl₂, BuSnCl₃, MeSn(O₃SCH₃)₃, Me₂Sn(O₃SCH₃)₂, BuSn(O₃SCH₃)₃ oder Bu₂Sn(O₃SCH₃)₂.

Das Inkontaktbringen oder die Umsetzung kann gegebenenfalls vorteilhaft in wässriger Lösung ausgeführt werden. Erfindungsgemäss bevorzugt wird so vorgegangen, dass zu einer vorgelegten wässrigen Lösung des Polyelektrolyten eine wässrige Lösung der Zinnverbindung der allgemeinen Formel (I) bei Raumtemperatur unter guter Durchmischung zugetropft wird. Die Zugabegeschwindigkeit erfolgt so, dass die Lösung in der Vorlage stets klar bleibt. Es kann jedoch bei erhöhter Zugaberate solange nachgerührt werden, bis die Lösung im Vorlagegefäss klar wird. Die Menge an Verbindungen der allgemeinen Formel I wird so gewählt, dass eine einerseits für den vorgesehenen Einsatzzweck ausreichende Menge an Sn vorhanden ist und andererseits der Katalysator noch wasserlöslich bleibt. Die Optimierung kann durch einfache orientierende Versuche vorgenommen werden.

Erfindungsgemäss positive Ergebnisse werden in der Regel erzielt, wenn Organozinnverbindungen der allgemeinen Formel I in einem Molverhältnis von 0,01-0,8, insbesondere 0,1-0,5, bezogen auf die Gruppen Z der Polyelektrolyten der allgemeinen Formel II und/oder III, eingesetzt werden.

Die so hergestellte Katalysatorlösung kann ohne weitere Behandlungsstufen direkt verwendet oder gelagert werden. Alternativ kann sie auch mittels der bekannten Verfahren entwässert und getrocknet und in wasserfreier Form gelagert und eingesetzt werden.

### Beispiele

In den nachfolgenden Beispielen sind alle Prozent- und Teil-Angaben als Gewichtsangaben zu verstehen, solange nichts anderes angegeben ist.

### Beispiel 1

72.0 g (0.2 mol) einer 30 %igen wässrigen Lösung von Poly(natriummethacrylat) (Fa. Aldrich, M_{w}: ca. 6500 per GPC, Mₙ: ca. 4000, pH = ca. 9) wurden mit 72.0 g Wasser verrührt. 11.0 g (0.05 mol) Dimethylzinndichlorid wurden bei Raumtemperatur in 100 g Wasser gelöst (pH dieser Lösung = 1). Die Poly(natriummethacrylat)-Lösung wurde vorgelegt und die Dimethylzinndichlorid-Lösung bei Raumtemperatur unter Rühren zugetropft. Bei Raumtemperatur wurde weitere 2 h gerührt, so dass eine klare Lösung entstand.

Das Produkt enthielt 2,3 % Sn und 88 % Wasser. Es hatte einen pH-Wert von 7 und war auch nach 21 Wochen Lagerung noch stabil.

### Beispiel 2

72.0 g (0.2 mol) einer 30 %igen wässrigen Poly(natriummethacrylat)-Lösung wurden mit 72.0 g Wasser verrührt. 8.8 g (0.04 mol) Dimethylzinndichlorid wurden bei Raumtemperatur in 49.6 g Wasser gelöst (pH dieser Lösung = 1). Die Poly(natriummethacrylat)-Lösung wurde vorgelegt und die Dimethylzinndichlorid-Lösung bei Raumtemperatur unter Rühren zugetropft. Bei Raumtemperatur wurde weitere 2 h gerührt, so dass eine klare Lösung entstand.

Das Produkt enthielt 2,4 % Sn und 85 % Wasser. Es hatte einen pH-Wert von 7 und war auch nach 17 Wochen Lagerung noch stabil.

### Beispiel 3

Zur Herstellung einer 50 %igen wässrigen Dimethylzinnmethylsulfonat-chlorid-Lösung wurden 6.78 g (0.02 mol) Dimethylzinnbis(methylsulfonat) und 4.40 g (0.02 mol) Dimethylzinndichlorid in 11.18 g Wasser gelöst und 4 h bei 70 °C gerührt.

72.0 g (0.2 mol) einer 30 %igen wässrigen Poly(natriummethacrylat)-Lösung wurden mit 72.0 g Wasser verrührt. 11.2 g (0.02 mol) der 50 %igen wässrigen Dimethylzinnmethylsulfonat-chlorid-Lösung wurden bei Raumtemperatur zugetropft. Zum Auflösen fester Bestandteile wurde 30 min bei Raumtemperatur gerührt Dann wurden weitere 11.2 g (0.02 mol) der 50 %igen wässrigen Dimethylzinnmethylsulfonat-chlorid-Lösung bei Raumtemperatur zugetropft und 2 h bei 60 °C gerührt, bis eine klare Lösung entstand.

Das Produkt enthielt 2,9 % Sn und 80 % Wasser. Es hatte einen pH-Wert von 7 und war auch nach 15 Wochen Lagerung noch stabil.

2 g dieses wasserhaltigen Produktes wurden 2 Stunden lang bei 105 °C getrocknet, es resultierten 0,3 g Feststoff mit einem Gehalt von 16 % Zinn. Dieses getrocknete Produkt war wiederauflösbar bei 20 °C in Wasser; seine wässrige Lösung zeigte die gleichen Eigenschaften wie das wasserhaltige Produkt vor der Trocknung.

### Beispiel 4

72.0 g (0.2 mol) einer 30 %igen wässrigen Poly(natriummethacrylat)-Lösung wurden mit 72.0 g Wasser verrührt. 13.6 g (0.04 mol) Dimethylzinn-bis(methylsulfonat) wurden bei Raumtemperatur in 60.0 g Wasser gelöst (pH dieser Lösung = 1). Die Poly(natriummethacrylat)-Lösung wurde vorgelegt und die Dimethylzinnbis(methylsulfonat)-Lösung bei Raumtemperatur unter Rühren zugetropft. Bei Raumtemperatur wurde weitere 2 h gerührt, so dass eine klare Lösung entstand.

Das Produkt enthielt 2,2 % Sn und 84 % Wasser. Es hatte einen pH-Wert von 7 und war auch nach 12 Wochen Lagerung noch stabil.

### Beispiel 5 (Anwendungsbeispiel)

### Beschreibung Experiment 5A (Vergleichsbeispiel):

In einen Pappbecher (Volumen ca. 600 ml) wurden 20 g Lupranol 2022 (Polyetherpolyol MW ca. 3500, Lieferant BASF) mit 0,74 g Wasser, 0,24 g Silicon SC 162 (Lieferant Union Carbide) und 0,056 g Dabco 33 LV (Cokatalysator Diazabicyclooctan 33 %ig, Lieferant Air Products Chemicals) unter Rühren vollständig vermischt. Zur vereinfachten Handhabung konnte zuvor ein Masterblend aus Wasser, Silicon und Dabco hergestellt und zu dem Polyetherpolyol dosiert werden.

Zu der Mischung wurden 0,0133 g Dibutylzinndilaurat gegeben und binnen 45 s vollständig eingerührt. Zur vereinfachten Handhabung konnte zuvor das Dibutylzinndilaurat in einer Teilmenge des Polyetherpolyols gelöst werden und dann der Mischung zudosiert werden.

Zu dieser Mischung wurden 9 g Toluylen-2,4-diisocyanat (Lieferant Aldrich) gegeben, die Reaktionsmischung wurde 10 sec kräftig gerührt.

Es entwickelte sich ein Polyurethanschaum, welcher sich ausdehnte und dabei härtete. Steigzeit (Zeit bis zur maximalen Ausdehnung des Schaums), Steighöhe (Höhe bei der maximalen Ausdehnung des Schaums) und Härtungsdauer (Zeit, bis ein berührtrockener Schaum vorliegt) wurden beobachtet.

Die Vergleichsbeispiele 5B - 5E sowie die Experimente 5F - 5G (erfindungsgemäss) wurden in analoger Weise mit den in Tabelle 1 genannten Mengenverhältnissen durchgeführt. Bei allen Experimenten, in welchen Zinnkatalysatoren verwendet wurden, waren die Zinnkonzentrationen gleich.

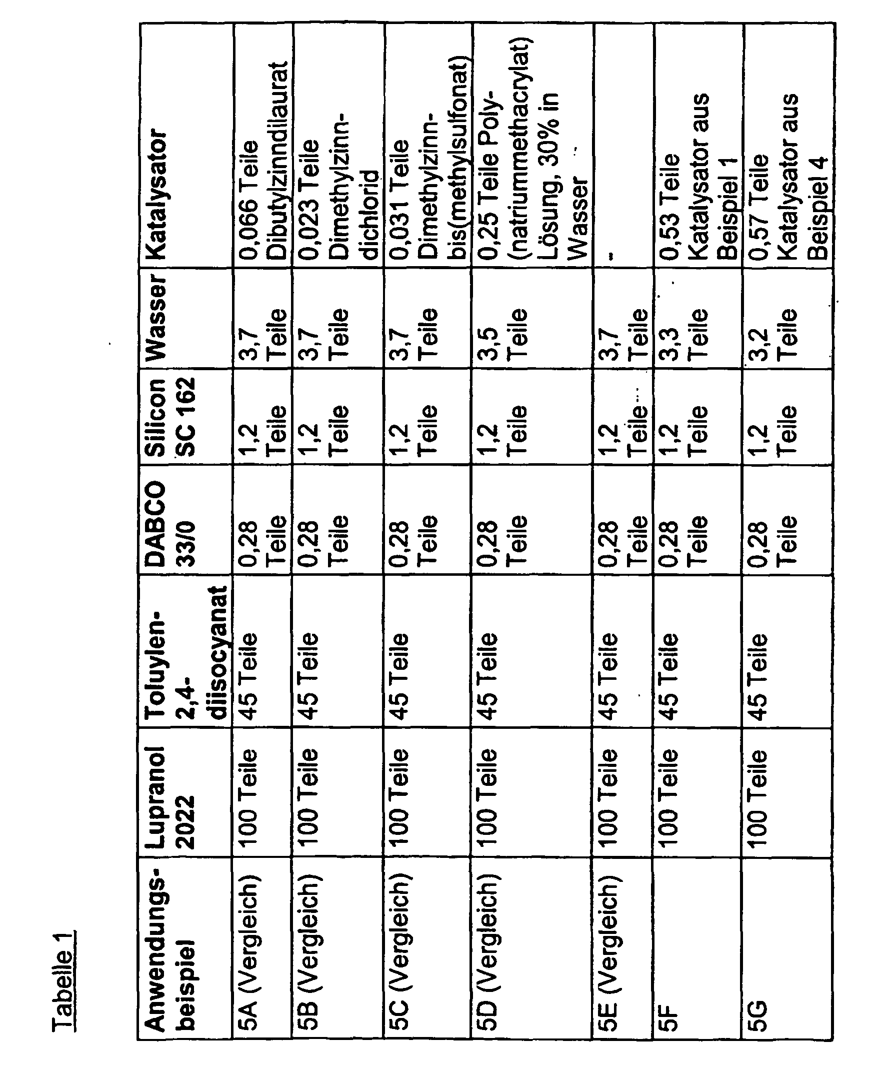

### Ergebnisse:

**Tabelle 2**

| **Anwendungsbeispiel** | **Steigzeit (min)** | **Steighöhe (cm)** | **Härtungsdauer bis zur Berührtrockenheit (min)** |
|---|---|---|---|
| 5A (Vergleich) | 195 | 10,5 | 180 |
| 5B (Vergleich) | 240 | 9,5 | 420 |
| 5C (Vergleich) | 240 | 9,5 | 300 |
| 5D (Vergleich) | 300 | 9 | 240 |
| 5E (Vergleich) | 240 | 8 | 480 |
| 5F | 210 | 10 | 180 |
| 5G | 210 | 10 | 180 |

### Beispiel 6 (Anwendungsbeispiel)

### Beschreibung Experiment 6A (Vergleichsbeispiel):

100 Teile Trimethoxymethylsilan, 100 Teile Wasser und 10,6 Teile Dibutylzinndilaurat wurden in ein Glasgefäss gefüllt, vermischt, das Gefäss verschlossen und bei Raumtemperatur gelagert. Der Zustand der Mischung wurde nach 1 d beurteilt.

Die Vergleichsbeispiele 6B - 6C sowie die Experimente 6D - 6E (erfindungsgemäss) wurden in analoger Weise mit den in Tabelle 2 genannten Mengenverhältnissen durchgeführt. Bei allen Experimenten, in welchen Zinnkatalysatoren verwendet wurden, waren die Zinnkonzentrationen gleich.

**Tabelle 3**

| **Anwendungsbeispiel** | **Trimethoxymethylsilan** | **Wasser** | **Katalysator** |
|---|---|---|---|
| 6A (Vergleich) | 100 Teile | 100 Teile | 10.6 Teile Dibutylzinndilaurat |
| 6B (Vergleich) | 100 Teile | 65Teile | 50 Teile Poly(natriummethacrylat)Lösung, 30% in Wasser |
| 6C (Vergleich) | 100 Teile | 100 Teile | - |
| 6D | 100 Teile | 24,3 Teile | 85,8 Teile Katalysator aus Beisp. 1 |
| 6E | 100 Teile | 22,8Teile | 90,1 Teile Katalysator aus Beisp. 4 |

### Ergebnisse:

**Tabelle 4**

| **Anwendungsbeispiel** | **Zustand nach 1 d** | | | |
|---|---|---|---|---|
| 6A (Vergleich) | 1/2 Feststoff | halbhart | glasig-weiss | pH der wässr. Phase 5 |
| 6B (Vergleich) | 1/3 Feststoff | gelartig | glasig | pH der wässr. Phase 10 |
| 6C (Vergleich) | kein Feststoff | wasserklare | Flüssigkeit | pH der wässr. Phase 5 |
| 6D | 1/2 Feststoff | weich | weiss | pH der wässr. Phase 7 |
| 6E | 1/2 Feststoff | weich | weiss | pH der wässr. Phase 7 |

## Patentansprüche

1. Verfahren zur Herstellung wasserlöslicher Organozinnkatalysatoren durch Inkontaktbringen von wässrigen Lösungen von Organozinnverbindungen der allgemeinen Formel (I) mit wässrigen Lösungen von Polyelektrolyten der allgemeinen Formeln II und/oder III
RₙSnX₄₋ₙ (I) 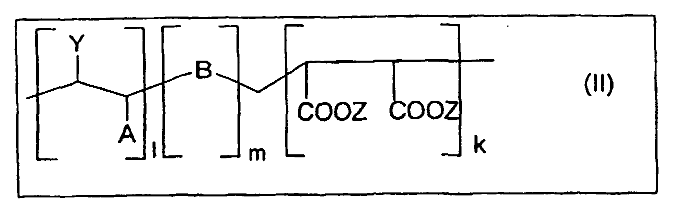 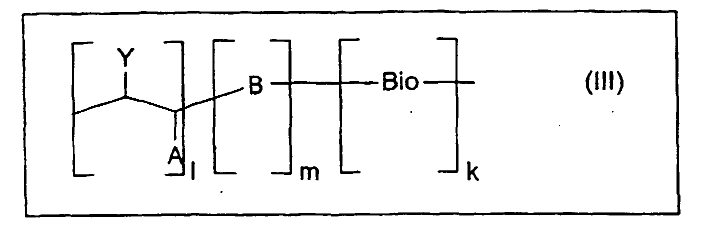
worin
R = C₁-C₄-Alkyl
n = 1 oder 2
X = anionischer Rest -O-, -OH, F, Cl, Br, J, -OR¹, -SR¹, -OOCR¹, -SO₃R¹ mit
R¹ = gegebenenfalls substituiertes Alkyl, Aryl oder Aralkyl bedeuten und R, X und R¹ jeweils gleich oder verschieden sein können,
Y = H oder CH₃,
A = -COOZ, -SO₃Z, -OSO₃Z oder -PO₃Z₂
Z = H, eine gegebenenfalls substituierte Alkylgruppe oder ein kationischer Rest
Bio = der Rest eines Biopolymeren
B = Rest eines ethylenisch ungesättigten Monomers und Y, A, Z, B innerhalb k, 1, m jeweils gleich oder verschieden sein können, mit m ≥ 0,
l, k = 0 - 200, mit l + k ≥ 20, wobei das Verhältnis von (I+k) / m so gewählt wird, dass die Polymeren in der dissoziierten Form wasserlöslich sind und gegebenenfalls anschliessender Entfernung des Wassers.

2. Verfahren zur Herstellung wasserlöslicher Organozinnkatalysatoren gemäss Anspruch 1, **dadurch gekennzeichnet, dass** Z = CH₃, Na, K, Ca oder NR²R³R⁴R⁵ ist mit R²-R⁵ = H oder eine gegebenenfalls substituierte Alkylgruppe.

3. Verfahren gemäss Anspruch 1, wobei als Organozinnverbindung Dimethylzinndichlorid und/oder Dimethylzinnbis(methylsulfonat) und/oder Butylzinntrichlorid verwendet wird.

4. Verfahren gemäss den Ansprüchen 1-3, wobei als Polyelektrolyt Poly(natriummethacrylat) und/oder Poly(natriumacrylat) verwendet wird.

5. Verwendung der gemäß den Verfahren nach den Ansprüchen 1 bis 4 hergestellten Katalysatorlösungen zur Herstellung von Urethanen oder Siloxanen.

6. Verwendung der gemäß den Verfahren nach den Ansprüchen 1 bis 4 hergestellten Katalysatorlösungen zur Deblockierung und Härtung verkappter Isocyanate und (Poly)siloxane, gegebenenfalls in Gegenwart weiterer mit den entkappten Isocyanaten und (Poly)siloxanen reaktiver Stoffe.

7. Verwendung der gemäß den Verfahren nach den Ansprüchen 1 bis 4 hergestellten Katalysatorlösungen zur Durchführung von Veresterungen und Transesterifizierungen.

8. Verwendung der gemäß den Verfahren nach den Ansprüchen 1 bis 4 hergestellten Katalysatorlösungen zur Durchführung von Polyadditions- oder Polykondensations-Reaktionen.

9. Verwendung der gemäß den Verfahren nach den Ansprüchen 1 bis 4 hergestellten Katalysatorlösungen zur Herstellung von Polyestern, Polyurethanen oder Polysiloxanen.

## Claims

1. A process for preparing a water-soluble organotin catalyst by contacting aqueous solutions of organotin compounds having the general formula (I) with aqueous solutions of polyelectrolytes of the general formula (II) and/or (III)
RₙSnX₄₋ₙ (I) 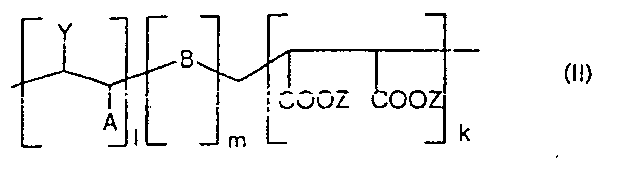 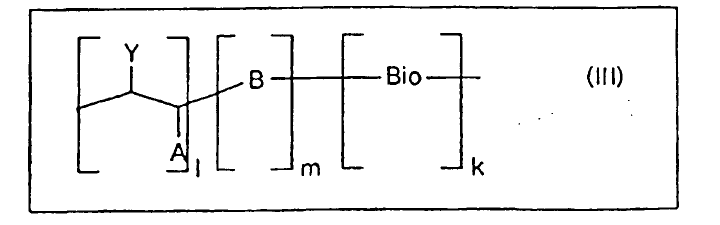
in which
R = C₁-C₄ alkyl,
n = 1or 2,
X = anionic radical -O-, -OH, F, Cl, Br, I, -OR¹, -SR¹, -OOCR¹, SO₃R¹ where
R¹ = unsubstituted or substituted alkyl, aryl or aralkyl and R, X and R¹ can each be identical or different,
Y = H or CH₃,
A = -COOZ, -SO₃Z, -OSO₃Z or -PO₃Z₂,
Z = H, an unsubstituted or substituted alkyl group or a cationic radical,
Bio = the radical of a biopolymer,
B = the radical of an ethylenically unsaturated monomer, and Y, A, Z and B within k, l and m can each be identical or different, m being ≥ 0,
l and k = 0 - 200, the ratio of (l+k)/m being chosen such that the polymers in the dissociated form are soluble in water, and, if appropriate, subsequently removing the water.

2. Process for preparing a water-soluble organotin catalyst, as claimed in claim 1, wherein Z = CH₃, Na, K, Ca or NR²R³R⁴R⁵ where R²-R⁵ = H or a substituted or unsubstituted alkyl group.

3. Process as claimed in claim 1, wherein the organotin compound used comprises dimethyltin dichloride and/or dimethyltin bis (methyl sulfonate) and/or butyltin trichloride.

4. Process as claimed in any of claims 1- 3, wherein the polyelectrolyte used is poly(sodium methacrylate) and/or poly(sodium acrylate).

5. Use of a catalyst solution prepared by a process according to claims 1 to 4 for preparing urethanes or siloxanes.

6. Use of a catalyst solution prepared by a process according to claims 1 to 4 for deblocking and curing capped isocyanates and (poly)siloxanes, in the presence or absence of further substances which are reactive with the uncapped isocyanates and (poly)siloxanes.

7. Use of a catalyst solution prepared by a process according to claims 1 to 4 for conducting esterifications and transesterifications.

8. Use of a catalyst solution prepared by a process according to claims 1 to 4 for conducting polyaddition or polycondensation reactions.

9. Use of a catalyst solution prepared by a process according to claims 1 to 4 for preparing polyesters, polyurethanes or claim polysiloxanes.

## Revendications

1. Procédé pour la préparation de catalyseurs organostanniques hydrosolubles, par mise en contact de solutions aqueuses de composés organostanniques de formule générale (I) avec des solutions aqueuses de polyélectrolytes de formules générales II et/ou III
**R**_{**n**}**SnX**_{**4-n**} **(I)** 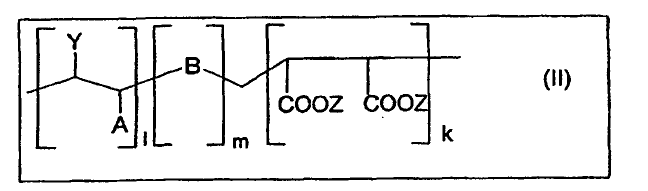 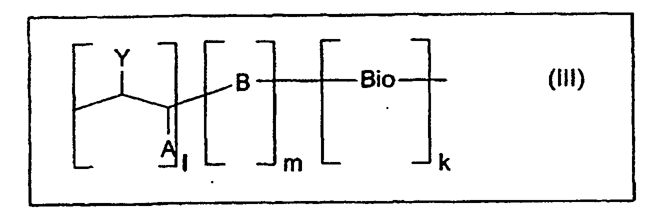
dans lesquelles
R représente un groupe alkyle en C₁-C₄
n = 1 ou 2
X représente un radical anionique -O-, -OH, F, Cl, Br, I, -OR¹, -SR¹, -OOCR¹, -SO₃R¹ où
R¹ représente un groupe alkyle, aryle ou aralkyle éventuellement substitué, et R, X et R¹ peuvent être chaque fois identiques ou différents,
Y = H ou CH₃,
A = -COOZ, -SO₃Z, -OSO₃Z ou -PO₃Z₂
Z = H, un groupe alkyle éventuellement substitué ou un radical cationique,
Bio représente le reste d'un biopolymère
B représente le reste d'un monomère à insaturation éthylénique et Y, A, Z, B à l'intérieur de k, l, m peuvent être chaque fois identiques ou différents, m étant ≥ 0,
l, k = 0-200, avec l+k≥20, le rapport (l+k)/m étant choisi de manière que les polymères sous la forme dissociée soient hydrosolubles,
et éventuellement élimination subséquente de l'eau.

2. Procédé pour la préparation de catalyseurs organostanniques hydrosolubles selon la revendication 1, **caractérisé en ce que** Z = CH₃, Na, K, Ca ou NR²R³R⁴R⁵, où R²-R⁵ = H ou un groupe alkyle éventuellement substitué.

3. Procédé selon la revendication 1, dans lequel on utilise en tant que composé organostannique du dichlorure de diméthylétain et/ou du bis(méthylsulfonate) de diméthylétain et/ou du trichlorure de butylétain.

4. Procédé selon les revendications 1-3, dans lequel on utilise en tant que polyélectrolyte du poly(méthacrylate de sodium) et/ou du poly(acrylate de sodium).

5. Utilisation des solutions de catalyseur préparées conformément aux procédés selon les revendications 1 à 4, pour la préparation d'uréthannes ou de siloxanes.

6. Utilisation des solutions de catalyseur préparées conformément aux procédés selon les revendications 1 à 4, pour le déblocage et le durcissement de (poly)siloxanes et d'isocyanates coiffés, éventuellement en présence d'autres substances réactives avec les (poly)siloxanes et isocyanates coiffés.

7. Utilisation des solutions de catalyseur préparées conformément aux procédés selon les revendications 1 à 4, pour l'exécution d'estérifications et de trans-estérifications.

8. Utilisation des solutions de catalyseur préparées conformément aux procédés selon les revendications 1 à 4, pour l'exécution de réactions de polyaddition ou de polycondensation.

9. Utilisation des solutions de catalyseur préparées conformément aux procédés selon les revendications 1 à 4, pour la préparation de polyesters, de polyuréthannes ou de polysiloxanes
